# EUROPEAN PATENT APPLICATION

(11) **EP 4 760 945 A1**
(43) Date of publication of application: **17.06.2026**
(21) Application number: 25854560.7
(22) Date of filing: 25.07.2025
(51) Int. Cl.: H01M 50/375, H01M 50/60, H01M 50/204

(54) **BATTERY MODULE HAVING IMPROVED SAFETY AND BATTERY PACK INCLUDING SAME**

(30) Priority: 15.08.2024 KR 20240109486
(71) Applicant: LG Energy Solution, Ltd., Seoul 07335 (KR)
(72) Inventor: SON, Hong Se, Daejeon 34122 (KR); PARK, Chan Hui, Daejeon 34122 (KR); KIM, Min Beom, Daejeon 34122 (KR)
(74) Representative: BCKIP Part mbB
(86) International application number: PCT/KR2025/011109
(87) International publication number: WO 2026/038751

(57) **Abstract**

Disclosed are a battery module with enhanced safety and a battery pack including the same, and more particularly a battery module including a plurality of battery cells, a module frame being configured to accommodate the plurality of battery cells, an end plate located at each of a front and a rear of the plurality of battery cells, a busbar frame being configured to electrically connect the plurality of battery cells to each other, a terminal portion having one side connected to the busbar frame and an other side projecting outwardly of the end plate, and a blocking member being located at a position adjacent to the terminal portion and a battery pack including the same.

## Description

### [Technical Field]

This application claims the benefit of priority to Korean Patent Application No. 2024-0109486 filed on August 15, 2024, the disclosure of which is incorporated herein by reference in its entirety.

The present invention relates to a battery module with enhanced safety and a battery pack including the same, and more particularly to a battery module with enhanced safety capable of preventing the occurrence of internal short circuit at a battery pack level as the result of high-temperature flying debris generated by short circuit in a battery module settling on a terminal located near a central part of the battery pack and a battery pack including the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a battery module received in a battery pack is provided with a terminal portion for electrical connection between adjacent battery modules, and the terminal portion may be located adjacent to a central part of the battery pack.

In the battery pack having the aforementioned structure, when short circuit occurs in a specific battery module, resultant high-temperature flying debris may settle on a terminal portion of an adjacent battery module, which may significantly increase the risk of secondary damage such as internal short circuit at a battery pack level.

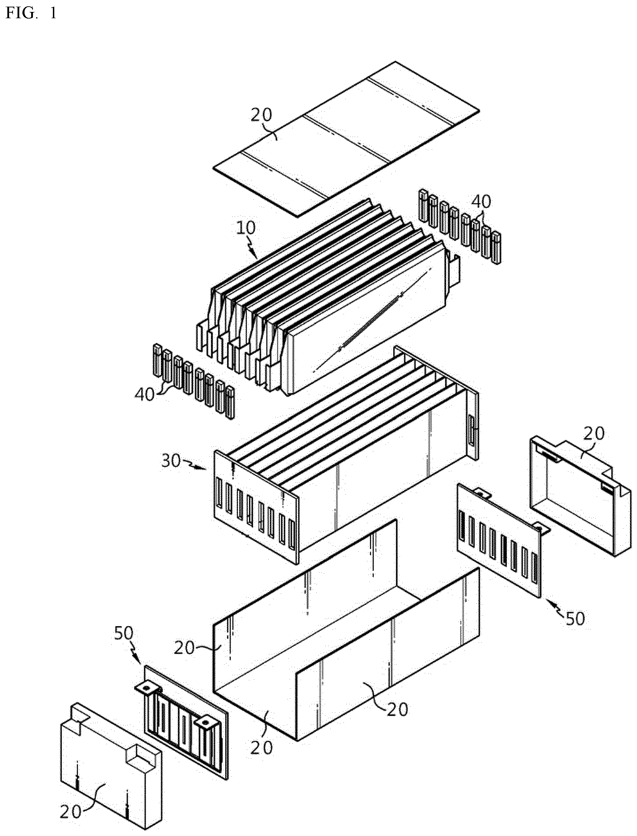

FIG. 1 is an exploded perspective view showing a conventional battery module. Referring to FIG. 1, the conventional battery module includes a plurality of battery cells 10, a module case 20 configured to receive the plurality of battery cells 10, a separation member 30 configured to separate the plurality of battery cells 10 from each other, an insulating block 40 located near an electrode lead of the battery cell 10, and a busbar assembly 50 configured to electrically connect the plurality of battery cells 10 to each other.

The conventional battery module has a structure in which the insulating block 40, which is made of insulating material and surrounds the electrode lead, is provided between the battery cells 10, thereby preventing the occurrence of short circuit due to contact between the electrode lead and the separation member 30.

This structure has the problem that, when high-temperature flying debris is generated due to short circuit in the battery module, the high-temperature flying debris may settle on an unprotected terminal portion protruding outwardly of the module case 20, whereby secondary damage may occur.

### (Prior Art Document)

(Patent Document 1) Korean Patent Application Publication No. 2023-0098020

### [Disclosure]

### [Technical Problem]

The present invention has been made in view of the above problems, and it is an object of the present invention to provide a battery module with improved safety capable of preventing damage to a terminal portion due to high-temperature flying debris or high-temperature ejecta generated by thermal runaway due to internal short circuit, thereby preventing secondary damage, and a battery pack including the same.

### [Technical Solution]

A battery module with enhanced safety according to the present invention to accomplish the above object includes a plurality of battery cells (100), a module frame (200), the module frame (200) being configured to accommodate the plurality of battery cells (100), an end plate (300) located at each of the front and the rear of the plurality of battery cells (100), a busbar frame (400), the busbar frame (400) being configured to electrically connect the plurality of battery cells (100) to each other, a terminal portion (500), the terminal portion (500) having one side connected to the busbar frame (400) and an other side projecting outwardly of the end plate (300), and a blocking member (600), the blocking member (600) being located at a position adjacent to the terminal portion (500).

Also, in the battery module according to the present invention, the blocking member (600) may include a receiving portion (610), the receiving portion (610) being open at one side and including a space, the space being configured to receive a foaming agent; an extension portion (620), the extension portion (620) extending from an upper side of the receiving portion (610) in a horizontal direction; and a cover portion (630), the cover portion (630) being located at the open part of the receiving portion (610).

Also, in the battery module according to the present invention, the foaming agent may be made of a material configured to expand in volume at a certain temperature or higher.

Also, in the battery module according to the present invention, the material may include at least one of an epoxy resin, a vinyl chloride resin, and a fluorine resin.

Also, in the battery module according to the present invention, the cover portion (630) may be configured to break at a certain temperature or higher or a certain pressure or higher.

Also, in the battery module according to the present invention, the end plate (300) may include a recessed portion (310) located at a position corresponding to the other side of the terminal portion (500), the recessed portion (310) having a depth configured to receive the blocking member (600).

Also, in the battery module according to the present invention, the recessed portion (310) may be located at a position adjacent to a lower side surface of the blocking member (600).

Also, in the battery module according to the present invention, a stepped portion (320) partially cut so as to correspond to the extension portion (620) may be located at an upper edge of the recessed portion (310).

Also, in the battery module according to the present invention, the receiving portion (610) and the extension portion (620) may be integrally formed.

Also, in the battery module according to the present invention, the cover portion (630) may have a flat plate shape.

Also, in the battery module according to the present invention, an edge of the cover portion (630) may be joined to the extension portion (620).

In addition, a battery pack according to the present invention includes the battery module.

### [Advantageous Effects]

As is apparent from the above description, a battery module according to the present invention has the advantage that a blocking member is provided at a position adjacent to a terminal portion and a foaming agent expands to protect the terminal portion in the event of internal short circuit, whereby it is possible to prevent secondary damage.

In addition, the battery module according to the present invention has the advantage that the foaming agent in the blocking member may surround the terminal portion when high temperatures occur, whereby it is possible to prevent damage to an adjacent battery module.

### [Description of Drawings]

FIG. 1 is an exploded perspective view showing a conventional battery module.
FIG. 2 is a perspective view showing a battery module according to an embodiment of the present invention.
FIG. 3 is an exploded perspective view showing the battery module according to the embodiment of the present invention.
FIG. 4 is a cross-sectional view taken along line A-A of FIG. 2.
FIG. 5 is a perspective view showing an end plate and a blocking member according to an embodiment of the present invention.
FIG. 6 is an exploded perspective view showing the blocking member according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module with enhanced safety according to the present invention and a battery pack including the same will be described with reference to the accompanying drawings.

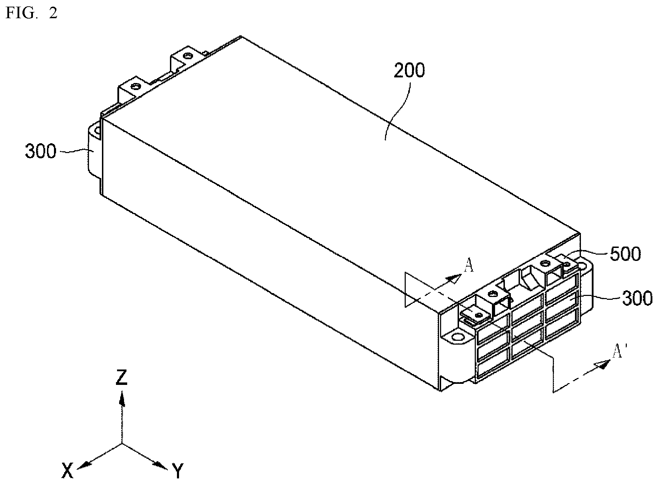

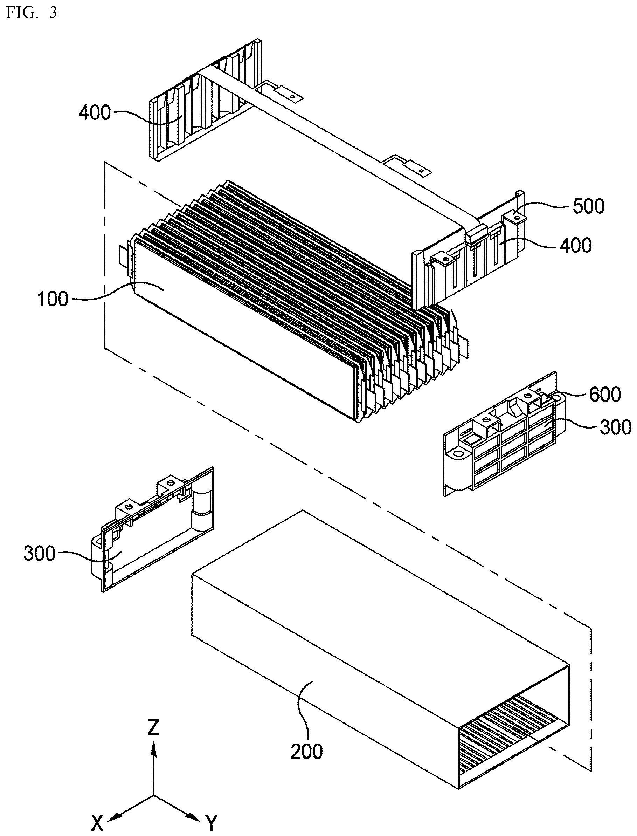

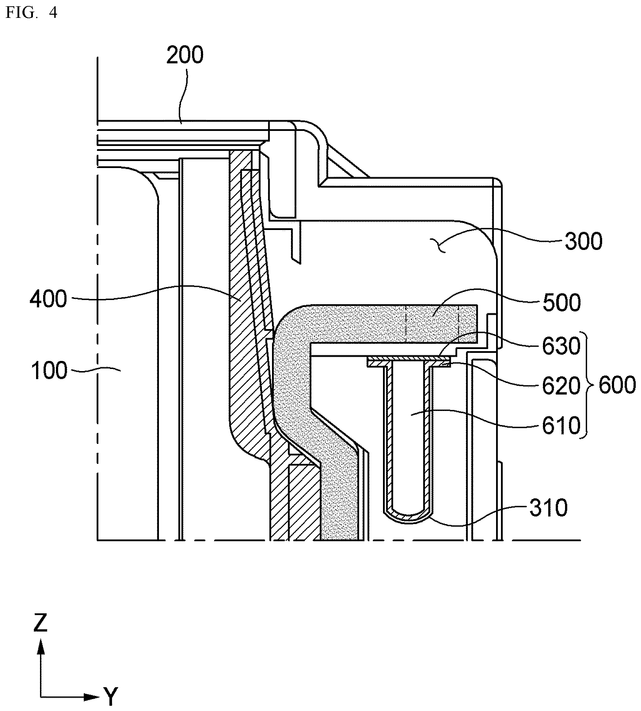

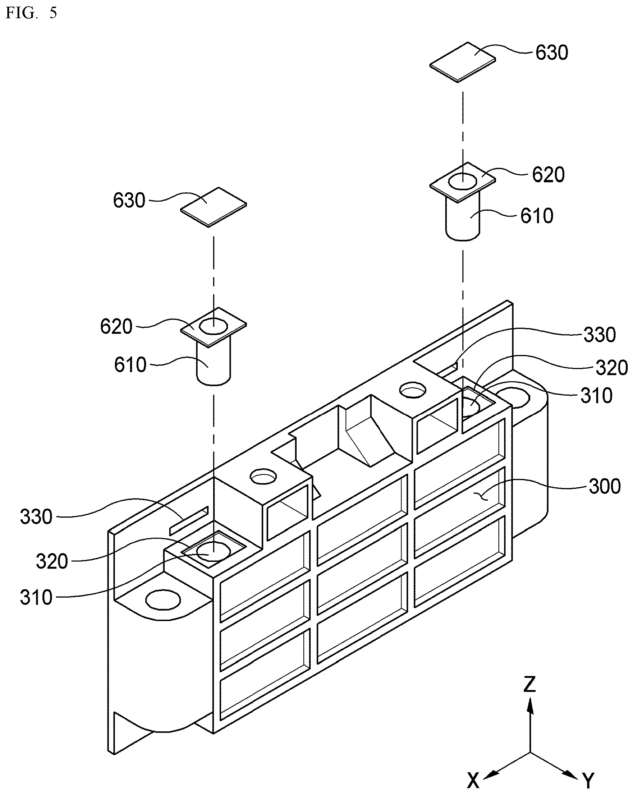

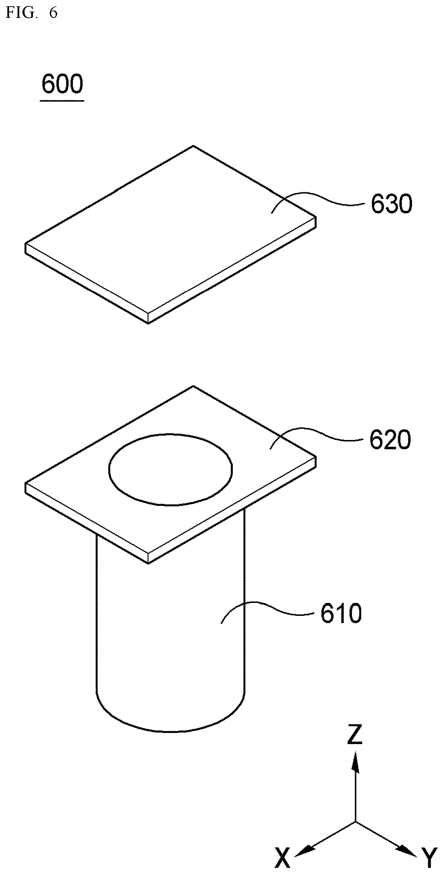

FIG. 2 is a perspective view showing a battery module according to an embodiment of the present invention, FIG. 3 is an exploded perspective view showing the battery module according to the embodiment of the present invention, FIG. 4 is a cross-sectional view taken along line A-A of FIG. 2, FIG. 5 is a perspective view showing an end plate and a blocking member according to an embodiment of the present invention, and FIG. 6 is an exploded perspective view showing the blocking member according to the embodiment of the present invention.

Referring to FIGs. 2 to 6, the battery module according to the present invention includes a battery cell 100, a module frame 200, an end plate 300, a busbar frame 400, a terminal portion 500, and a blocking member 600.

The battery cell 100 may be a pouch-shaped battery cell. The battery cell 100 includes an electrode assembly, a pouch case configured to receive the electrode assembly, an electrode lead protruding outwardly of the pouch case, and an insulating film located between the pouch case and the electrode lead.

The electrode assembly is configured to have a structure in which positive electrodes and negative electrodes are alternately stacked a plurality of times in the state in which separators are interposed therebetween, and a pair of electrode leads constituted by a positive electrode lead and a negative electrode lead is exposed to the outside of the pouch case in a state of being electrically connected to positive tabs and negative tabs, respectively.

The positive electrode is manufactured by applying a positive electrode mixture including a positive electrode active material to a positive electrode current collector and drying the same, and the positive electrode mixture may optionally further include a binder, a conductive agent, or a filler, as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO4 (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode is manufactured by applying a negative electrode mixture including a negative electrode active material to a negative electrode current collector and drying the same, and the negative electrode mixture may further include a component, such as a conductive agent, a binder, or a filler, as needed.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 µm. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form an electrode tab bundle.

The pouch case may be made of a laminate sheet including an inner covering layer, a metal layer, and an outer covering layer, and may be provided with a pocket portion configured to receive the electrode assembly and an edge portion extending outward from one side of the pocket portion by a certain length.

The inner covering layer is in direct contact with the electrode assembly, and therefore the inner covering layer must exhibit high insulation properties and high electrolytic resistance. In addition, the inner covering layer must exhibit high sealability in order to hermetically isolate the pouch case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided on the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In general, the pair of electrode leads, which is constituted by the positive electrode lead and the negative electrode lead, is connected respectively to the electrode tab bundles, more specifically a positive electrode tab bundle and a negative electrode tab bundle, by welding or the like, and protrudes outwardly of the pouch case.

The insulating film is located on an upper surface and a lower surface of the electrode lead, which overlap the sealed portion of the pouch case that is thermally fused, and is configured to prevent electricity generated by the electrode assembly from flowing to the pouch case via the electrode lead and to maintain the sealed state of the pouch case.

Here, it is preferable for the insulating film to be made of a non-conductive material, which does not conduct electricity well, and an insulating tape having a relatively small thickness while being easy to attach to the electrode lead is generally used.

Specifically, the insulating film may be made of at least one selected from the group consisting of polyimide (PI), polypropylene (PP), polyethylene (PE), polyethylene terephthalate (PET), and polyvinyl chloride (PVC), high density polyethylene (HDPE), and an epoxy resin, and is thermally fused and bonded to the inner resin layer of the pouch case through heat and pressure.

Although the battery cell 100 having a structure in which the electrode leads protrude in opposite directions has been described and shown in the figures, a unidirectional pouch-shaped battery cell having electrode leads protruding in one direction may also be used as another embodiment of the present invention.

The battery cell 100 may be provided in plural, and the plurality of battery cells 100 is stacked in one direction for easy electrical connection therebetween to form a battery cell stack. For example, the plurality of battery cells 100 may be stacked in one direction, as shown in FIG. 3.

The module frame 200 is configured to receive the plurality of battery cells 100, and may be a metal frame with both surfaces open.

More specifically, the module frame 200 may be open on both sides of the battery cell stack formed by stacking the plurality of battery cells 100, from which the electrode leads 111 protrude. However, the module frame 200 shown in FIG. 3 is merely an example, and there is no particular restriction on the form thereof as long as it is possible to receive the battery cell stack.

In addition, although the module frame 200 of FIG. 3 is shown as a monoframe made of a metal plate in which an upper surface, lower surface, and both side surfaces are integrally connected to each other, a structure in which a top cover is joined to a U-shaped frame with an open top or a structure in which a U-shaped frame and an inverted U-shaped frame are coupled to each other may also be used.

The end plate 300 is located at each of the open surfaces of the module frame 200 to seal the interior of the module frame 200, thereby protecting the plurality of battery cells 100 received therein from the outside.

The end plate 300 is provided with a recessed portion 310, which is recessed to a certain depth to form a certain space, formed at a position corresponding to the terminal portion 500, which has one side connected to the busbar frame 400 and the other side protruding outwardly of the end plate 300, a description of which will follow.

A stepped portion 320 formed by reduction of a certain height is provided at an upper edge of the recessed portion 310.

In addition, an opening 330 having a certain area is formed in the end plate 300, and the terminal portion 500, a description of which will follow, protrudes outwardly of the end plate through the opening 330.

That is, the other side of the terminal portion 500 protrudes through the opening 330 of the end plate 300, and the recessed portion 310 and the stepped portion 320 are formed at the position of the end plate 300 adjacent to the protruding terminal portion 500 protruding, more specifically under the terminal portion 500, as shown in FIG. 5.

The busbar frame 400 is configured to electrically connect the plurality of battery cells 100 to each other, and may be disposed on each of one side and the other side of the battery cell stack in which the plurality of battery cells 100 is stacked.

An insulating member (not shown) configured to prevent contact between the end plate 300 and the busbar frame 400 such that the insulated state can be maintained may be further be provided between the end plate 300 and the busbar frame 400.

The terminal portion 500 may be formed such that one side thereof is connected to the busbar frame 400 and the other side thereof protrudes outwardly of the end plate 300 through the opening 330 of the end plate 300, and electrically connects the plurality of battery cells 100 connected to the busbar frame 400 to the outside.

The outwardly exposed part of the terminal portion 500 may be connected to an adjacent battery module via another connection member, and may be connected to a battery disconnect unit (BDU), etc., to form a high voltage (HV) connection.

Here, the HV connection refers to a connection serving as a power source for supplying power, which means connection between the battery cells 100 or between battery modules. That is, the battery module may be electrically connected to a neighboring battery module via the terminal portion 500.

The blocking member 600 is located under the terminal portion 500, and has a foaming agent configured to expand at high temperatures so as to surround the terminal portion 500, thereby protecting the terminal portion 500. The blocking member includes a receiving portion 610, an extension portion 620, and a cover portion 630.

The receiving portion 610 extends in a height direction (Z-axis direction), has an empty space formed therein, and is open at the top. The receiving portion is inserted into and located in the recessed portion 310 of the end plate 300.

A foaming agent made of a material that expands in volume at a certain temperature or higher is received in the inner space of the receiving portion 610. As an example, the material of the foaming agent may include at least one of an epoxy resin, a vinyl chloride resin, and a fluorine resin.

When internal short circuit occurs in the battery module and high temperatures are generated, the foaming agent expands and surrounds the terminal portion 500 located above the receiving portion 610, thereby preventing breakage of and secondary damage to the terminal portion caused by high-temperature flames, high-temperature flying debris, or high-temperature ejecta.

Here, the length (Z-axis direction) of the receiving portion 610 may be formed so as to be less than or equal to the depth (Z-axis direction) of the recessed portion 310 of the end plate 300. This is because, if the length (Z-axis direction) of the receiving portion 610 is formed so as to be greater than the depth (Z-axis direction) of the recessed portion 310, an upper part of the receiving portion 610 is not received in the recessed portion 310 but protrudes outwardly of the recess.

The extension portion 620 may extend from the opening of the upper part of the receiving portion 610 in a horizontal direction (XY-axis direction), and may be seated on the stepped portion 320 of the end plate 300.

The extension portion 620 may be formed in the same shape as the stepped portion 320, and may be formed with an area that can be located in the area of the stepped portion 320.

The extension portion 620 may prevent the receiving portion 610 from being inserted too deeply beyond what is necessary when inserted into the recessed portion 310 such that the receiving portion can be located at a predetermined position.

The receiving portion 610 and the extension portion 620 may be integrally formed, as shown in the figures.

The cover portion 630 is located at the open part of the receiving portion 610 to seal the space of the receiving portion 610 in which the foaming agent is received and to prevent the foaming agent from leaking outside the receiving portion 610, and may be formed in a flat plate shape.

An edge of the cover portion 630 may be joined and fixed to the extension portion 620 such that the cover portion can be located above the receiving portion 610.

As an example, methods capable of fix contact parts of the cover portion 630 and the extension portion 620 to each other with a certain force, such as hot melt bonding or adhesive application, may be used without limitation.

The cover portion 630 may be made of a material that can break at a certain temperature or higher. This material may break due to heat, high-temperature flying debris, or high-temperature ejecta caused by thermal runaway due to internal short circuit. As a result, the top of the receiving portion 610 may open, whereby the foaming agent may expand and easily surround the terminal portion 500.

In addition, the cover portion 630 may be made of a material that can break at a certain pressure or higher. When heat is generated by thermal runaway due to internal short circuit, the foaming agent in the receiving portion 610 expands and applies pressure to the cover portion 630 such that the cover portion can surround the terminal portion 500.

The material of the cover portion 630 is not particularly limited as long as the material can break at a certain temperature or pressure.

In addition, the present invention provides a battery pack including the battery module and a device including the battery module or the battery pack.

Those skilled in the art to which the present invention pertains will appreciate that various applications and modifications are possible within the category of the present invention based on the above description.

### (Description of Reference Numerals)

100: Battery cell
200: Module frame
300: End plate
310: Recessed portion
320: Stepped portion
330: Opening
400: Busbar frame
500: Terminal portion
600: Blocking member
610: Receiving portion
620: Extension portion
630: Cover portion

## Claims

1. A battery module comprising:
a plurality of battery cells;
a module frame, the module frame being configured to accommodate the plurality of battery cells;
an end plate located at each of a front and a rear of the plurality of battery cells;
a busbar frame, the busbar frame being configured to electrically connect the plurality of battery cells to each other;
a terminal portion, the terminal portion having one side connected to the busbar frame and an other side projecting outwardly of the end plate; and
a blocking member, the blocking member being located at a position adjacent to the terminal portion.

2. The battery module according to claim 1, wherein the blocking member comprises a receiving portion, the receiving portion being open at one side and including:
a space, the space being configured to receive a foaming agent;
an extension portion, the extension portion extending from an upper side of the receiving portion in a horizontal direction; and
a cover portion, the cover portion being located at the open side of the receiving portion.

3. The battery module according to claim 2, wherein the foaming agent is made of a material configured to expand in volume at a certain temperature or higher.

4. The battery module according to claim 3, wherein the material comprises at least one of an epoxy resin, a vinyl chloride resin, and a fluorine resin.

5. The battery module according to claim 2, wherein the cover portion is configured to break at a certain temperature or higher or a certain pressure or higher.

6. The battery module according to claim 2, wherein the end plate includes a recessed portion located at a position corresponding to the other side of the terminal portion, the recessed portion having a depth configured to receive the blocking member.

7. The battery module according to claim 6, wherein the recessed portion is located at a position adjacent to a lower side surface of the blocking member.

8. The battery module according to claim 7, wherein a stepped portion partially cut so as to correspond to the extension portion is located at an upper edge of the recessed portion.

9. The battery module according to claim 2, wherein the receiving portion and the extension portion are integrally formed.

10. The battery module according to claim 2, wherein the cover portion has a flat plate shape.

11. The battery module according to claim 10, wherein an edge of the cover portion is joined to the extension portion.

12. A battery pack comprising the battery module according to any one of claims 1 to 11.
